# EUROPÄISCHE PATENTSCHRIFT

(11) **EP 0 805 084 B1**
(45) Veröffentlichungstag und Bekanntmachung des Hinweises auf die Patenterteilung: **26.03.2003**
(21) Anmeldenummer: 97106867.1
(22) Anmeldetag: 25.04.1997
(51) Int. Cl.: B60T 8/00, B60T 13/66

(54) **Verfahren zum kontrollierten Bremsen eines Kraftfahrzeuges**
Procedure for the controlled braking of a vehicle
Procédé pour le freinage contrôlé d'un véhicule

(30) Priorität: 30.04.1996 DE 19617285
(43) Veröffentlichungstag der Anmeldung: 05.11.1997
(73) Patentinhaber: Continental Teves AG & Co. oHG, 60441 Frankfurt am Main (DE)
(72) Erfinder: Maron, Christof, Dr., 30989 Gehrden (DE); Prinzler, Hubertus, 30853 Langenhagen (DE); Dieckmann, Thomas, Dr., 30982 Pattensen (DE)

(56) Entgegenhaltungen:
- WO-A-91/02668
- WO-A-92/05986
- DE-A- 4 022 671
- DE-A- 19 500 837

## Beschreibung

Die Erfindung betrifft ein Verfahren zum kontrollierten Bremsen eines Kraftfahrzeuges mit einer Bremsanlage, die unter anderem ein Bremspedal zur Erzeugung eines Pedalsignals, jeweils einen Bremsaktuator für jedes Rad des Kraftfahrzeuges und eine Zentraleinheit, die mit den Bremsaktuatoren verbunden ist und Informationen an diese übermitteln kann, enthält, bei dem jeder Bremsaktuator bei einem Bremsvorgang mit einer zuvor berechneten Bremskraft beaufschlagt wird. Die Erfindung betrifft ferner eine Bremsanlage für ein Kraftfahrzeug.

In jüngster Vergangenheit sind für Kraftfahrzeuge, insbesondere für Personenkraftwagen, Bremsanlagen vom Brake-by-Wire Typ entwickelt worden. Eine derartige Bremsanlage ist beispielsweise aus der DE 40 22 671 A1 bekannt und verfügt über einen Bremswertgeber, der mit zwei Zentralmodulen verbunden ist, die ihrerseits über jeweils einen Datenbus mit zwei Radmodulen verbunden sind. Über die Datenbusse können die Zentralmodule und die ihnen zugeordneten Radmodule Daten im seriellen Betrieb austauschen.

Mit Hilfe der aus der DE 40 22 671 A1 bekannten Bremsanlage wird ein Bremsvorgang im wesentlichen wie folgt durchgeführt. Der von einem Fahrer vorgegebene Bremswert wird über den Bremswertgeber den Zentralmodulen zugeleitet und hier zunächst in individuelle Bremswerte für die einzelnen Radmodule umgewandelt. Daraufhin werden die individuellen Bremswerte über die Datenbusse von den Zentralmodulen an die Radmodule weitergeleitet und auf Basis der individuellen Bremswerte wird von den Radmodulen der Bremsvorgang an dem jeweiligen Rad des Kraftfahrzeuges eingeleitet.

Durch die Erzeugung individueller Bremswerte können beispielsweise die unterschiedlichen Radlasten, z.B. durch Kurvenfahrt und/oder Belastung oder die unterschiedlichen Temperaturen der Bremsen berücksichtigt werden, so daß eine überhitzte Bremse erkannt und ausgeregelt wird und Giermomente des Kraftfahrzeuges ausgeglichen werden können. Zur Berücksichtigung der Betriebsparameter der einzelnen Radbremsen müssen jedoch über die Datenbusse Daten von den einzelnen Radmodulen zu den Zentraleinheiten übertragen werden. Infolgedessen sind die Datenbusse zeitweise "belegt" und es können dann keine Daten für die Einleitung eines Bremsvorganges von den Zentralmodulen zu den Radmodulen übertragen werden. Es kommt dann zu einer unerwünschten Verzögerung des Bremsvorganges. Darüber hinaus ist nicht immer gewährleistet, daß die von den Zentralmodulen "abgeschickten" individuellen Bremswerte gleichzeitig an allen vier Radmodulen ankommen, so daß es aufgrund von Ungleichzeitigkeiten zu einem unerwünschten Schiefziehen des Kraftfahrzeuges kommen kann. Schließlich ist die aus der DE 40 22 671 A1 bekannte Bremsanlage insofern als unsicher zu bezeichnen, als das es bei einem Ausfall der Zentralmodule zu einem Totalausfall der Bremsanlage kommt, da in diesem Fall der vorgegebene Bremswert von den Zentralmodulen nicht mehr registriert und die individuellen Bremswerte von den Zentralmodulen nicht mehr an die einzelnen Radmodule weitergegeben werden.

Aus der EP 0 439 559 B1 ist eine Anlage mit verteilten, untereinander über einen seriellen Datenbus kommunizierenden Modulen bekannt, mit der in einzelnen Modulen Befehle ohne Zeitverzug ausführbar sind. Dazu werden von einem Zentralmodul über den Datenbus zu einem beliebigen Zeitpunkt Befehle zu den anderen Modulen übermittelt, wo diese gespeichert werden. Die Aufforderung zur Durchführung des gespeicherten Befehls wird den Modulen über separate Datenleitungen zugeführt und der gespeicherte Befehl wird unmittelbar nach Empfang der Aufforderung ausgeführt.

Die aus der EP 0 439 559 B1 bekannte Anlage ist jedoch zur Verwendung in Bremsanlagen vom Brake-by-Wire Typ nicht geeignet, da die Befehlsgenerierung in dem Zentralmodul, die Befehlsübermittlung zwischen dem Zentralmodul und den anderen Modulen und die Speicherung der festen Befehle in den Modulen automatisch abläuft und von dem Fahrer eines Kraftfahrzeuges nicht beeinflußbar ist. Bei einem Bremsvorgang handelt es sich aber gerade um einen Vorgang, der vom Fahrer durch geeignete Betätigung des Bremspedals situationsbedingt beeinflußt werden soll.

Der Erfindung liegt die Aufgabe zugrunde, ein Verfahren zum kontrollierten Bremsen eines Kraftfahrzeuges zu schaffen, bei dem einerseits der Bremsvorgang möglichst unmittelbar nach Betätigung des Bremspedals eingeleitet wird und bei dem andererseits eine sichere Notbremsung des Kraftfahrzeuges auch dann noch möglich ist, wenn das oder die Zentraleinheiten der Bremsanlage ausfallen. Der Erfindung liegt ferner die Aufgabe zugrunde, eine Bremsanlage zur Durchführung des Verfahrens zu schaffen.

Gemäß den kennzeichnenden Merkmalen des Anspruchs 1 wird die Aufgabe durch folgende Verfahrensschritte gelöst:
- jedem Bremsaktuator (10a, 10b), (16a, 16b) ist eine Recheneinheit zugeordnet (8a, 8b), (14a, 14b) zugeordnet, in der zu jedem Zeitpunkt ein aktueller Bremskraftverteilungsschlüssel (BS) bzw. zumindest eine Komponente (Kᵢ) aus dem Bremskraftverteilungsschlüssel (BS), die dem entsprechenden Bremsaktuator (10a, 10b), (16a, 16b) aus dem Bremskraftverteilungsschlüssel (BS) zugeordnet wird, vorliegt und
- das Pedalsignal (S) wird direkt an die Recheneinheiten (8a, 8b), (14a, 14b) der Bremsaktuatoren (10a, 10b), (16a, 16b) geleitet und
- die Bremskraft wird in jeder der Recheneinheiten (8a, 8b), (14a, 14b) der einzelnen Bremsaktuatoren (10a, 10b), (16a und 16b) aus der Komponente (Kᵢ) und einer Information (S), die dem Pedalsignal entspricht, berechnet und daß
- in zeitlichen Abständen in der Zentraleinheit (6) ein neuer Bremskraftverteilungsschlüssel (BS') berechnet wird und zumindest die einem bestimmten Bremsaktuator (10a, 10b), (16a, 16b) zugeordnete neue Komponente (Kᵢ') an die entsprechende Recheneinheit (8a, 8b), (14a, 14b) des jeweiligen Bremsaktuators (10a, 10b), (16a, 16b) übermittelt wird und dort die alte Komponente (Kᵢ) ersetzt.

Der Bremskraftverteilungsschlüssel wird in der Zentraleinheit auf Basis der Fahrzeugdaten (z.B. Radstand, Schwerpunktlage und ähnlichem mehr), der Geschwindigkeit, des Lenkwinkels, der Querbeschleunigung und der Radlasten des Kraftfahrzeuges etc. berechnet.

Gemäß den kennzeichnenden Merkmalen des nebengeordneten Anspruchs 5 wird die Aufgabe bei einer Bremsanlage der eingangs genannten Art wie folgt gelöst:

Jeder Bremsaktuator enthält unter anderem:
- einen überschreibbaren Speicher, in dem zu jedem Zeitpunkt ein aktueller Bremskraftverteilungsschlüssel (BS1) bzw. zumindest eine Komponente (Kᵢ) aus dem Bremskraftverteilungsschlüssel (BS), die dem entsprechenden Bremsaktuator aus dem Bremskraftverteilungsschlüssel (BS1) zugeordnet ist, gespeichert ist und
- eine Recheneinheit, in der die Bremskraft an dem Bremsaktuator aus dem Produkt der Komponente (Kᵢ) und einer Information (S), die dem Pedalsignal entspricht, berechenbar ist.
   Ferner ist die Zentraleinheit derart ausgebildet, daß in ihr ein neuer Bremskraftverteilungsschlüssel (BS') berechenbar ist, von dem zumindest die einem bestimmten Bremsaktuator zugeordnete neue Komponente (Kᵢ') an den jeweiligen Bremsaktuator übermittelt wird und dort die gespeicherte Komponente (Kᵢ) ersetzt.

Der Grundgedanke der Erfindung ist darin zu sehen, daß in der Zentraleinheit ein relativer Bremskraftverteilungsschlüssel berechnet wird, was zu jedem beliebigen Zeitpunkt unabhängig von der Betätigung der Bremsanlage durch den Fahrer des Kraftfahrzeuges möglich ist. Dieser relative Bremskraftverteilungsschlüssel wird an die einzelnen Recheneinheiten der Bremsaktuatoren übermittelt und dort gespeichert, so daß dort zu jedem Zeitpunkt unabhängig von einem Bremsvorgang ein Bremskraftverteilungsschlüssel vorliegt. Bei einem Bremsvorgang wird aus dem Pedalsignal und der entsprechenden Komponente des relativen Bremskraftverteilungsschlüssels die absolute Bremskraft für den entsprechenden Bremsaktuator berechnet.

Die mit der Erfindung erzielten Vorteile sind insbesondere darin zu sehen, daß Verzögerungen bei der Einleitung des Bremsvorganges vermieden werden, da das Pedalsignal über separate Signalleitungen direkt an die Bremsaktuatoren geleitet wird, und somit Verzögerung durch eine Überlastungdes Datenbusses etc. ausgeschlossen sind. Ferner liegt bei "Ankunft" des Pedalsignals immer ein aktueller Bremskraftverteilungsschlüssel in den Bremsaktuatoren vor, so daß die Berechnung unmittelbar erfolgen kann.

Ein weiterer Vorteil der Erfindung ist darin zu sehen, daß einem Schiefziehen des Kraftfahrzeuges wirksam vorgebeugt ist, da der Signalweg des Pedalsignals zu allen Bremsaktuatoren gleich ist und die Berechnung der Bremskraft in den einzelnen Bremsaktuatoren die gleiche Zeit in Anspruch nimmt und somit alle Bremsaktuatoren gleichzeitig aktiviert werden. Ferner ist die Bremsanlage sehr ausfallsicher, da auch bei einem Ausfall der Zentraleinheit ein Bremsvorgang "mit verminderter Qualität" auf Basis des direkt an die Bremsaktuatoren geleiteten Pedalsignals eingeleitet werden kann.

Gemäß einem Ausführungsbeispiel der Erfindung wird der Bremskraftverteilungsschlüssel in der Zentraleinheit periodisch berechnet und an die einzelnen Recheneinheiten der Bremsaktuatoren übermittelt. Die Frequenz der Berechnung des Bremskraftverteilungsschlüssels liegt vorzugsweise in einem Frequenzbereich von ca. 100 bis 1000 Hertz. Der Vorteil dieses Ausführungsbeispiels ist darin zu sehen, daß - insbesondere bei einer hohen Frequenz - immer ein sehr aktueller Bremskraftverteilungsschlüssel bzw. die entsprechende Komponente in den Bremsaktuatoren vorliegt.

Gemäß einem alternativen Ausführungsbeispiel der Erfindung wird ein neuer Bremskraftverteilungsschlüssel immer dann berechnet und an die einzelnen Recheneinheiten der Bremsaktuatoren übermittelt, wenn eine Änderung der Fahrsituation des Kraftfahrzeuges festgestellt wird, wenn sich also beispielsweise die Geschwindigkeit, der Lenkwinkel, die Querbeschleunigung etc. des Kraftfahrzeuges über ein vorgegebenes Maß hinaus verändern.

Gemäß einer Weiterbildung der Erfindung nach Anspruch 4 wird in der jeweiligen Recheneinheit des jeweiligen Bremsaktuator der zuletzt gespeicherte Bremskraftverteilungsschlüssel bzw. die zuletzt gespeicherte Komponente des Bremskraftverteilungsschlüssels, die der Recheneinheit des Bremsaktuators zugeordnet ist, durch einen festen vorgegebenen Wert ersetzt, wenn nicht innerhalb eines vorgegebenen Zeitraums ein neuer Bremskraftverteilungsschlüssel bzw. die entsprechende Komponente an jeden Bremsaktuator übermittelt worden ist. Diese Weiterbildung der Erfindung hat den Vorteil, daß auch bei einem Ausfall der Zentraleinheit ein Bremskraftverteilungsschlüssel in den Recheneinheiten der einzelnen Bremsaktuatoren gespeichert werden kann, der noch eine "qualitativ hochwertige" Notbremsung zuläßt. Beispielsweise kann ein Bremskraftverteilungsschlüssel gespeichert werden, der für die beiden Vorderräder jeweils 35/100 der einzuregelnden Bremskraft und die beiden Hinterräder jeweils 15/100 der einzuregelnden Bremskraft vorsieht. In diesem Fall entfallen 70 % der Bremskraft auf die Vorderräder und nur 30 % der Bremskraft auf die Hinterräder, so daß einem frühzeitigen Blockieren der Hinterräder, das in der Regel zu einem gefährlichen "Ausbrechen" des Kraftfahrzeuges führt, wirksam vorgebeugt ist.

Weitere Vorteile und ein Ausführungsbeispiel der Erfindung werden im Zusammenhang mit den nachstehenden Figuren erläutert, darin zeigt:
- Fig. 1: eine Bremsanlage in schematischer Darstellung,
- Fig. 2: ein Blockschaubild,
- Fig. 3: ein Blockschaubild.

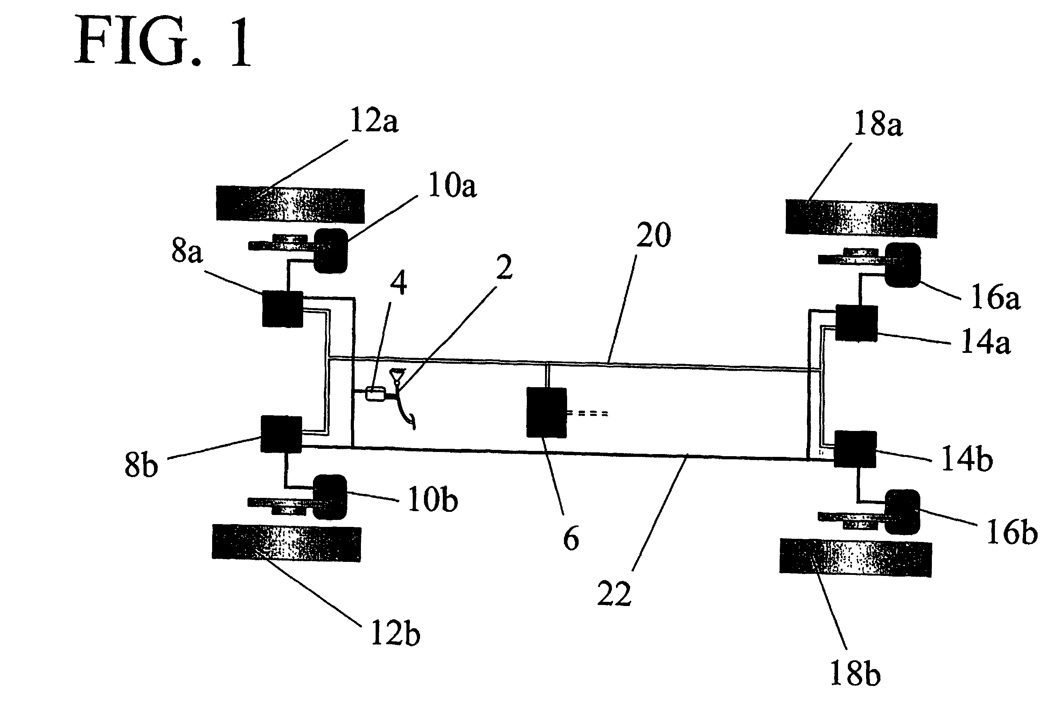

Fig. 1 zeigt in schematischer Darstellung eine Bremsanlage vom Brake-by-Wire Typ, wobei in der Figur nur die für die nachfolgenden Erläuterungen notwendigen Bestandteile dargestellt sind. Die Bremsanlage verfügt über ein Bremspedal 2 mit einem Sensor 4, der den von einem Fahrer durch eine auf das Bremspedal 2 einwirkende Fußkraft kundgetanen Bremswunschin ein elektrisches Pedalsignal S umwandelt. Darüber hinaus verfügt die Bremsanlage über eine Zentraleinheit 6, über Recheneinheiten 8a und 8b der Bremsaktuatoren 10a und 10b, die den Vorderachsrädern 12a und 12b zugeordnet sind. Entsprechend verfügt die Bremsanlage über Recheneinheiten 14a und 14b der Bremsaktuatoren 16a und 16b, die den Hinterachsrädern 18a und 18b zugeordnet sind. Schließlich verfügt die Bremsanlage über einen seriellen Datenbus 20, über den die Zentraleinheit 6 mit den Recheneinheiten 8a, 8b, 14a und 14b Daten austauschen kann. Darüber hinaus verfügt die Bremsanlage über eine Signalleitung 22, über die von dem Sensor 4 das Pedalsignal S zu den Recheneinheiten 8a, 8b, 14a und 14b übertragbar ist.

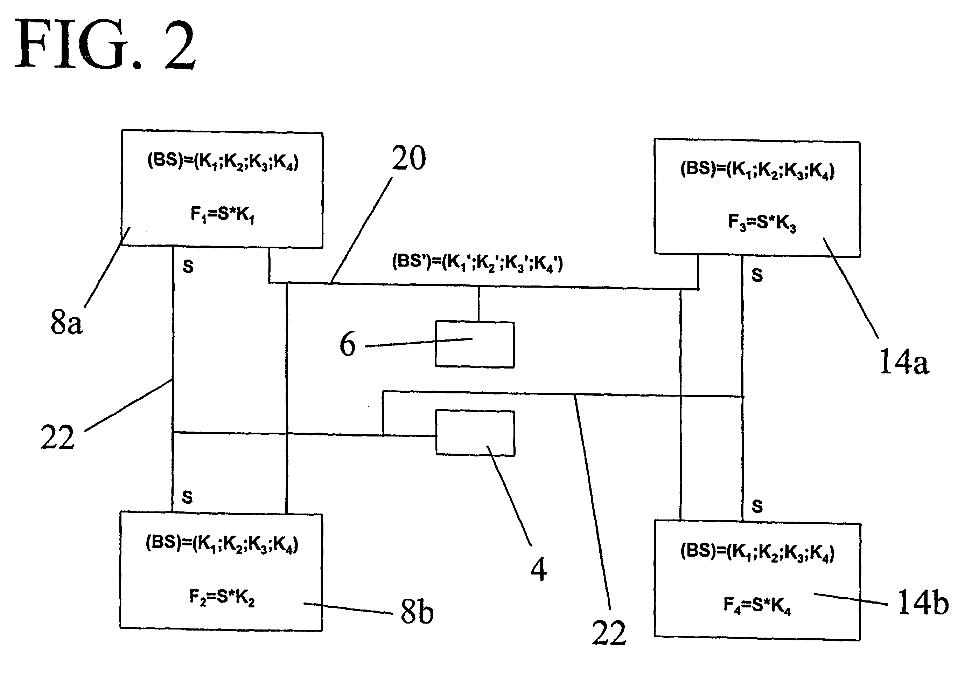

Die Funktion die in der Fig. 1 gezeigten Bremsanlage wird im folgenden im Zusammenhang mit der Figur 2 näher erläutert. Bei einem Bremsvorgang wird das in dem Sensor 4 erzeugte Pedalsignal S über die separate Signalleitung 22 zu den Recheneinheiten 8a, 8b, 14a und 14b übertragen. Die "gleichzeitige" Ankunft des Pedalsignals S an den Recheneinheiten 8a, 8b, 14a und 14b wird durch eine analoge bzw. quasianaloge Signalstrecke zwischen dem Sensor 4 und den einzelnen Recheneinheiten 8a, 8b, 14a und 14b sichergestellt. In den einzelnenen Recheneinheiten 8a, 8b, 14a und 14b ist bereits ein Bremskraftverteilungsschlüssel BS, bestehend aus den Komponenten K₁ bis K₄ gespeichert. Die einzelnen Komponenten des Bremskraftverteilungsschlüssels BS geben die relative Bremskraft an, die bei einem durch Betätigung des Bremspedals 2 ausgelösten Bremsvorgang an dem entsprechenden Bremsaktuator einzusteuern wäre. (Ein Bremskraftverteilungsschlüssel könnte beispielsweise wie folgt aussehen: [45/100; 25/100; 20/100, 10/100]. Dies würde bedeuten, daß bei einem Bremsvorgang an dem Rad 12a 45%, an dem Rad 12b 25%, an dem Rad 18a 20% und an dem Rad 18b 10% der gesamten durch das Pedalsignal S dargestellten Bremskraft eingeregelt würden.)

In den einzelnen Recheneinheiten 8a, 8b, 14a und 14b wird die an den zugeordneten Bremsaktuatoren 10a, 10b, 16a und 16b einzusteuernde Bremskraft F aus dem Produkt des Pedalsignals S und der entsprechenden Komponente des Bremskraftverteilungsschlüssels berechnet. In der Recheneinheit 8a, die dem Bremsaktuator 10a zugeordnet ist, der das Vorderrad 12a bremst (siehe Fig. 1), wird die absolute Bremskraft F₁ also aus dem Produkt S und der Komponente K₁ des Bremskraftverteilungsschlüssels BS berechnet, usw.

Der in den Recheneinheiten 8a, 8b, 14a und 14b gespeicherte Bremskraftverteilungsschlüssel BS wird in zeitlichen Abständen durch einen neuen Bremskraftverteilungsschlüssel BS' ersetzt. Der neue Bremskraftverteilungsschlüssel BS' wird in der Zentraleinheit 6 auf Basis der unterschiedlichsten Informationen berechnet und über den seriellen Datenbus 20 gleichzeitig an die Recheneinheiten 8a, 8b, 14a und 14b übermittelt, wo er den alten Bremskraftverteilungsschlüssel BSersetzt. Nach Speicherung des neuen Bremskraftverteilungsschlüssels BS' wird die Berechnung der einzelnen Bremskräfte auf Basis des neuen Bremskraftverteilungsschlüssels BS' vorgenommen. (Der beispielhaft genannte Bremsverteilungsschlüssel [45/100; 25/100; 20/100; 10/100] wird, z.B. durch den neuen Bremskraftverteilungsschlüssel [20/100; 40/100; 15/100; 25/100] ersetzt, so daß nicht mehr die Räder 12a und 18a der rechten Kraftfahrzeugseite stärker gebremst würden als die Räder 12b und 18b der linken Kraftfahrzeugseite, sondern umgekehrt. Eine solche Änderung des Bremskraftverteilungsschlüssels kann z.B. durch eine Änderung der Fahrbahnoberfläche bedingt sein.)

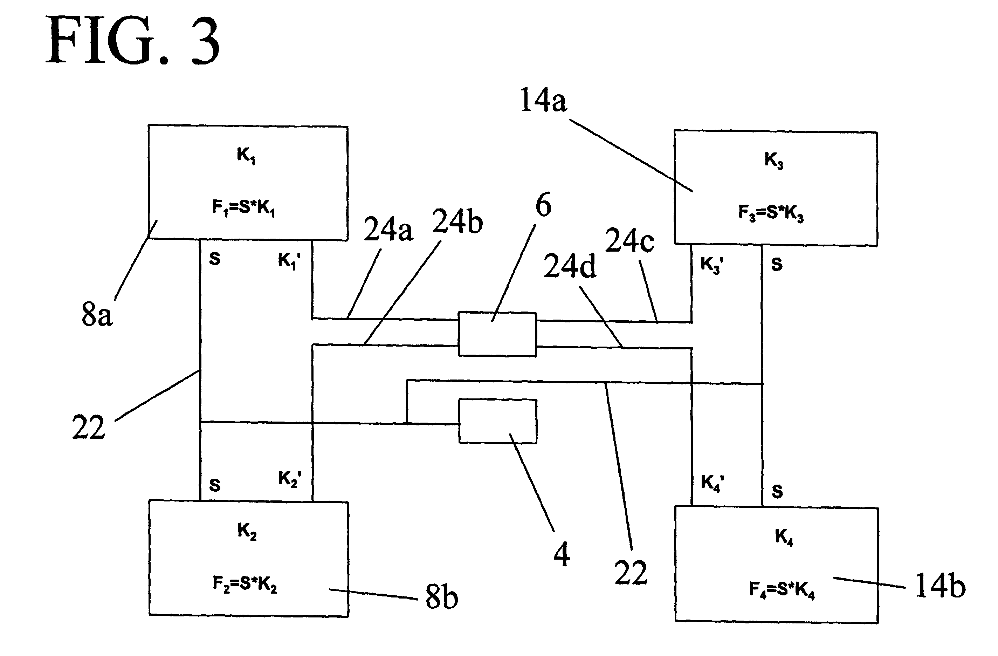

Bei der in der Fig. 3 dargestellten Bremsanlage erfolgt die Berechnung der einzelnen Bremskräfte F in den Recheneinheiten 8a, 8b, 14a und 14b genauso wie es bereits im Zusammenhang mit der Fig. 2 erläutert worden ist. Der einzige Unterschied zu der Fig. 2 besteht darin, daß die Zentraleinheit 6 nicht, wie in der Fig. 2 gezeigt, über einen seriellen Datenbus 20, sondern über einzelne Signalleitungen 24a, 24b, 24c und 24d mit den entsprechenden Recheneinheiten 8a, 8b, 14a und 14b verbunden ist. In der Zentraleinheit 6 wird ebenfalls in zeitlichen Abständen ein neuer Bremskraftverteilungsschlüssel BS', bestehend aus den Komponenten K₁' bis K₄' berechnet und die einzelnen Komponenten des Bremskraftverteilungsschlüssels werden nun über die entsprechenden Signalleitungen 24a, 24b, 24c und 24d an die entsprechenden Recheneinheiten 8a, 8b, 14a und 14b übermittelt. Die gleichzeitige Ankunft der Komponenten wird durch die Art der Signalübertragung auf den Signalleitungen 24a, 24b, 24c und 24d sichergestellt. Die neuen Komponenten K₁' bis K₄' ersetzen in den entsprechenden Recheneinheiten 8a, 8b, 14a und 14b die gespeicherten Komponenten K1 bis K4 des alten Bremskraftverteilungsschlüssels BS, und ab dem Zeitpunkt der Ersetzung werden die neuen Bremskräfte F auf Basis der neuen Komponenten K₁' bis K₄' berechnet.

### Bezugszeichenliste

- 2: Bremspedal
- 4: Sensor
- 6: Zentraleinheit
- 8a, 8b: Recheneinheiten der Bremsaktuatoren 10a, 10b
- 10a, 10b: Bremsaktuatoren der Vorderachsräder 12a, 12b
- 12a, 12b: Vorderachsräder
- 14a, 14b: Recheneinheiten der Bremsaktuatoren 16a, 16b
- 16a, 16b: Bremsaktuatoren der Hinterachsräder
- 18a, 18b: Hinterachsräder
- 20: serieller Datenbus
- 22: Signalleitung von Sensor 4 zu Recheneinheiten 8a, 8b, 14a, 14b
- 24a, 24b, 24c, 24d,: Signalleitungen von der Zentraleinheit 6 zu den Recheneinheiten 8a, 8b, 14a, 14b

## Patentansprüche

1. Verfahren zum kontrollierten Bremsen eines Kraftfahrzeuges mit einer Bremsanlage, die unter anderem ein Bremspedal (2) zur Erzeugung eines Pedalsignals (S), jeweils einen Bremsaktuator (10a, 10b), (16a, 16b) für jedes Rad (12a, 12b), (18a, 18b) des Kraftfahrzeuges und eine Zentraleinheit (6), die mit den Bremsaktuatoren (10a, 10b), (16a, 16b) verbunden ist und Informationen an diese übermitteln kann, enthält, bei dem jeder Bremsaktuator (10a, 10b), (16a, 16b) mit einer zuvor berechneten Bremskraft beaufschlagt wird, wobei jedem Bremsaktuator (10a, 10b), (16a, 16b) eine Recheneinheit (8a, 8b), (14a, 14b) zugeordnet ist,
**dadurch gekennzeichnet, daß**
- in der jedem Bremsaktuator (10a, 10b), (16a, 16b) zugeordneten Recheneinheit (8a, 8b), (14a, 14b) zu jedem Zeitpunkt ein aktueller Bremskraftverteilungsschlüssel (BS) bzw. zumindest eine Komponente (Kᵢ) aus dem Bremskraftverteilungsschlüssel (BS), die dem entsprechenden Bremsaktuator (10a, 10b), (16a, 16b) aus dem Bremskraftverteilungsschlüssel (BS) zugeordnet wird, vorliegt und
- das Pedalsignal (S) direkt an die Recheneinheiten (8a, 8b), (14a, 14b) der Bremsaktuatoren (10a, 10b), (16a, 16b) geleitet wird und
- die Bremskraft in jeder der Recheneinheiten (8a, 8b), (14a, 14b) der einzelnen Bremsaktuatoren (10a, 10b), (16a und 16b) aus der Komponente (Kᵢ) aus dem Bremskraftverteilungsschlüssel (BS) und einer Information (S), die dem Pedalsignal entspricht, berechnet wird und daß
- in zeitlichen Abständen in der Zentraleinheit (6) ein neuer Bremskraftverteilungsschlüssel (BS') berechnet und zumindest die einem bestimmten Bremsaktuator (10a, 10b), (16a, 16b) zugeordnete neue Komponente (Kᵢ') an die entsprechende Recheneinheit (8a, 8b), (14a, 14b) des jeweiligen Bremsaktuators (10a, 10b), (16a, 16b) übermittelt wird und dort die alte Komponente (Kᵢ) ersetzt.

2. Verfahren zum kontrollierten Bremsen eines Kraftfahrzeugs nach Anspruch 1, **dadurch gekennzeichnet, daß** ein neuer Bremskraftverteilungsschlüssel (BS') periodisch berechnet wird.

3. Verfahren zum kontrollierten Bremsen eines Kraftfahrzeuges nach Anspruch 1, **dadurch gekennzeichnet, daß** ein neuer Bremskraftverteilungsschlüssel (BS') berechnet wird, wenn eine Änderung der Fahrsituation des Kraftfahrzeuges festgestellt wird.

4. Verfahren zum kontrollierten Bremsen eines Kraftfahrzeuges nach einem der Ansprüche 1 bis 3, **dadurch gekennzeichnet, daß**, wenn nicht innerhalb eines vorgegebenen Zeitraums zumindest die neue Komponente Kᵢ' an die jeweilige Recheneinheit (8a, 8b), (14a, 14b) des jeweiligen Bremsaktuators (10a, 10b), (16a, 16b) übermittelt wird, in der Recheneinheit die zuletzt gespeicherte Komponente (Kᵢ) durch einen fest vorgegebenen Wert ersetzt wird.

5. Elektrische Bremsanlage für ein Kraftfahrzeug, die unter anderem ein Bremspedal (2), jeweils einen Bremsaktuator (10a, 10b), (16a, 16b) für jedes Rad (12a, 12b), (18a, 18b) des Kraftfahrzeuges, der bei einem Bremsvorgang mit einer zuvor berechneten Bremskraft beaufschlagt wird, und eine Zentraleinheit (6) enthält, die mit den Bremsaktuatoren(10a, 10b), (16a, 16b) verbunden ist und Informationen an diese übermitteln kann, sowie jedem Bremsaktuator (10a, 10b), (16a, 16b) zugeordnet eine Recheneinheit (8a, 8b), (14a, 14b), **dadurch gekennzeichnet, daß** jeder Bremsaktuator (10a, 10b), (16a, 16b) unter anderem enthält:
- einen überschreibbaren Speicher, in dem zu jedem Zeitpunkt ein aktueller Bremskraftverteilungsschlüssel (BS) bzw. zumindest eine Komponente (Kᵢ) aus dem Bremskraftverteilungsschlüssel (BS), die dem entsprechenden Bremsaktuator (10a, 10b), (16a, 16b) aus dem Bremskraftverteilungsschlüssel (BS) zugeordnet ist, gespeichert ist, wobei
- in der Recheneinheit (8a, 8b), (14a, 14b) die Bremskraft an dem Bremsaktuator (10a, 10b), (16a, 16b) aus dem Produkt der Komponente (Kᵢ) und einer Information (S), die einem Pedalsignal entspricht, berechenbar ist
und die Zentraleinheit derart ausgebildet ist, daß
- in ihr ein neuer Bremskraftverteilungsschlüssel (BS') berechenbar ist, von dem zumindest die einem bestimmten Bremsaktuator (10a, 10b), (16a, 16b) zugeordnete neue Komponente (Kᵢ') an den jeweiligen Bremsaktuator (10a, 10b), (16a, 16b) übermittelt wird und dort die gespeicherte Komponente (Kᵢ) ersetzt.

## Claims

1. A method for controlled braking of a motor vehicle with a brake system comprising, among others, a brake pedal (2) for producing a pedal signal (S), one brake actuator (10a, 10b), (16a, 16b) for each wheel (12a, 12b), (18a, 18b) of the motor vehicle, and a central unit (6) which is connected to the brake actuators (10a, 10b), (16a, 16b) and can transmit information to the actuators, wherein each brake actuator (10a,10b), (16a, 16b) is acted upon by a previously computed braking force, a computing unit (8a, 8b), (14a, 14b) being associated with each brake actuator (10a, 10b), (16a, 16b),
**characterized in that**
in the computing unit (8a, 8b), (14a, 14b) associated with each brake actuator (10a, 10b), (16a, 16b), there prevails at any point of time a current braking-force distribution key (BS) and/or at least one component (Kᵢ) from said braking-force distribution key (BS) which is associated with the corresponding brake actuator (10a, 10b), (16a, 16b) from the braking-force distribution key (BS), and
the pedal signal (S) is sent directly to the computing units (8a, 8b), (14a, 14b) of the brake actuators (10a, 10b), (16a, 16b), and
the brake force in each of the computing units (8a, 8b), (14a, 14b) of the individual brake actuators (10a, 10b), (16a and 16b) is calculated from the component (Kᵢ) from the braking-force distribution key (BS) and an information (S) that corresponds to the pedal signal, and that
a new braking-force distribution key (BS') is computed at time intervals in the central unit (6), and at least the new component (Kᵢ') assigned to a defined brake actuator (10a, 10b), (16a, 16b) is transmitted to the corresponding computing unit (8a, 8b), (14a, 14b) of the respective brake actuator (10a, 10b), (16a, 16b) and there replaces the old component (Kᵢ) .

2. Method for controlled braking of a motor vehicle as claimed in claim 1,
**characterized in that** a new braking-force distribution key (BS') is periodically computed.

3. Method for controlled braking of a motor vehicle as claimed in claim 1,
**characterized in that** a new braking-force distribution key (BS') is computed when a change of the driving situation of the motor vehicle is determined.

4. Method for controlled braking of a motor vehicle as claimed in any one of claims 1 to 3,
**characterized in that** unless at least the new component (Kᵢ') is transmitted to the respective computing unit (8a, 8b), (14a, 14b) of the respective brake actuator (10a, 10b), (16a, 16b) within a predetermined time span, the last stored component (Kᵢ) in the computing unit is replaced by an invariably preset value.

5. Electrical brake system for a motor vehicle comprising, among others, a brake pedal (2), one brake actuator (10a, 10b), (16a, 16b) for each wheel (12a, 12b), (18a, 18b) of the motor vehicle, which actuator is acted upon by a previously computed braking force during a braking operation, as well as a central unit (6) which is connected to the brake actuators (10a, 10b), (16a, 16b) and can transmit information to these, as well as a computing unit (8a, 8b), (14a, 14b) being associated with each brake actuator (10a, 10b), (16a, 16b),
**characterized in that** each brake actuator (10a, 10b), (16a, 16b) comprises among others:
an overwrite memory wherein at any point of time a current braking-force distribution key (BS) and/or at least one component (Kᵢ) from said braking-force distribution key (BS) is stored, said component being associated with the corresponding brake actuator (10a, 10b), (16a, 16b) from the braking-force distribution key (BS), wherein
the braking force at the brake actuator (10a, 10b), (16a, 16b) may be computed in the computing unit (8a, 8b), (14a, 14b) from the product of the component (Kᵢ) and an information (S) which corresponds to a pedal signal,
and the central unit is so designed that in it a new braking-force distribution key (BS') can be computed, from which at least the new component (Kᵢ') assigned to a determined brake actuator (10a, 10b), (16a, 16b) is transmitted to the respective brake actuator (10a, 10b), (16a, 16b) and there replaces the stored component (Kᵢ).

## Revendications

1. Procédé pour le freinage contrôlé d'un véhicule automobile comportant un système de freinage qui contient entre autres une pédale de frein (2) pour produire un signal de pédale (S), un actionneur de frein (10a, 10b), (16a, 16b) respectif pour chaque roue (12a, 12b), (18a, 18b) du véhicule automobile et une unité centrale (6) qui est reliée aux actionneurs de frein (10a, 10b), (16a, 16b) et peut transmettre des informations à ceux-ci, dans lequel chaque actionneur (10a, 10b), (16a, 16b) est sollicité par une force de freinage calculée au préalable, à chaque actionneur de frein (10a, 10b), (16a, 16b) est affectée une unité de calcul (8a, 8b), (14a, 14b),
**caractérisé en ce que**
- dans chaque unité de calcul (8a, 8b), (14a, 14b) associée à chaque actionneur de frein (10a, 10b), (16a, 16b), se trouve à chaque instant un code actuel de répartition de la force de freinage (BS) ou au moins une composante (Kᵢ) du code de répartition de la force de freinage (BS) qui est affectée à l'actionneur de freinage (10a, 10b), (16a, 16b) correspondant à partir du code de répartition de la force de freinage (BS), et
- le signal de pédale (S) est acheminé directement vers les unités de calcul (8a, 8b), (14a, 14b) des actionneurs de frein (10a, 10b), (16a, 16b), et
- la force de freinage dans chacune des unités de calcul (8a, 8b), (14a, 14b) des actionneurs de frein (10a, 10b), (16a, 16b) est calculée à partir de la composante (Kᵢ) à partir du code de répartition de la force de freinage (BS), et d'une information (S) qui correspond au signal de pédale, et **en ce que**
- à intervalles de temps est calculé dans l'unité centrale (6) un nouveau code de répartition de la force de freinage (BS'), et au moins la nouvelle composante (Kᵢ'), affectée à un actionneur de frein (10a, 10b), (16a, 16b) déterminé, est transmise à l'unité de calcul (8a, 8b), (14a, 14b) correspondante de l'actionneur de frein (10a, 10b), (16a, 16b) respectif, et y remplace l'ancienne composante (Kᵢ).

2. Procédé pour le freinage contrôlé d'un véhicule automobile selon la revendication 1, **caractérisé en ce qu'**un nouveau code de répartition de la force de freinage (BS') est calculé périodiquememnt.

3. Procédé pour le freinage contrôlé d'un véhicule automobile selon la revendication 1, **caractérisé en ce qu'**un nouveau code de répartition de la force de freinage (BS') est calculé si une variation de la situation de conduite du véhicule automobile est constatée.

4. Procédé pour le freinage contrôlé d'un véhicule automobile selon l'une des revendications 1 à 3, **caractérisé en ce que**, si au moins la nouvelle composante (Kᵢ') n'est pas transmise à l'unité de calcul (8a, 8b), (14a, 14b) respective de l'actionneur de frein (10a, 10b), (16a, 16b) respectif à l'intérieur d'un laps de temps prédéterminé, la dernière composante mémorisée (Kᵢ) est remplacée dans l'unité de calcul par une valeur prédéterminée fixe.

5. Système de freinage électrique pour un véhicule automobile qui contient entre autres une pédale de frein (2), un actionneur de frein (10a, 10b), (16a, 16b) respectif pour chaque roue (12a, 12b), (18a, 18b) du véhicule automobile qui est sollicité, au cours d'une opération de freinage, par une force de freinage calculée au préalable, ainsi qu'une unité centrale (6) qui est reliée aux actionneurs de frein (10a, 10b), (16a, 16b) et peut transmettre des informations à ceux-ci, ainsi qu'une unité de calcul (8a, 8b), (14a, 14b) affectée à chaque actionneur de frein (10a, 10b), (16a, 16b), **caractérisé en ce que** chaque actionneur de frein (10a, 10b), (16a, 16b) contient entre autres :
- une mémoire réenregistrable dans laquelle, à chaque instant, un code actuel de répartition de la force de freinage (BS) ou au moins une composante (Kᵢ) du code de répartition de la force de freinage (BS), qui est affecté à l'actionneur de frein (10a, 10b), (16a, 16b) correspondant à partir du code de répartition de la force de freinage (BS), est mémorisée,
- dans l'unité de calcul (8a, 8b), (14a, 14b) pouvant être calculée la force de freinage sur l'actionneur de frein (10a, 10b), (16a, 16b) à partir du produit de la composante (Kᵢ) et d'une information (S) qui correspond à un signal de pédale,
et l'unité centrale étant conçue de manière que
- dans celle-ci un nouveau code de répartition de la force de freinage (BS') puisse être calculé duquel au moins une nouvelle composante (Kᵢ'), affectée à un actionneur de frein (10a, 10b), (16a, 16b) déterminé, est transmise à l'actionneur de frein (10a, 10b), (16a, 16b) respectif et y remplace la composante mémorisée (Kᵢ).
